# EUROPEAN PATENT SPECIFICATION

(11) **EP 3 312 110 B1**
(45) Date of publication and mention of the grant of the patent: **18.12.2019**
(21) Application number: 17192146.3
(22) Date of filing: 20.09.2017
(51) Int. Cl.: B05B 14/20, B65G 45/22, B65G 45/24, B65G 45/26, B65G 45/12

(54) **APPARATUS AND METHOD FOR CLEANING AND RECOVERING PAINT IN PAINTING MACHINES**
VORRICHTUNG UND VERFAHREN ZUM REINIGEN UND RÜCKGEWINNEN VON FARBE IN STREICHMASCHINEN
APPAREIL ET PROCÉDÉ DE NETTOYAGE ET DE RÉCUPÉRATION DE PEINTURE DANS DES MACHINES À PEINDRE

(30) Priority: 21.09.2016 IT 201600094514
(43) Date of publication of application: 25.04.2018
(73) Proprietor: CEFLA SOCIETA' COOPERATIVA, 40026 Imola (BO) (IT)
(72) Inventor: GIOVANNINI, Cristian, 40026 Imola (BO) (IT); PUNGETTI, Cristian, 40026 Imola (BO) (IT); FRANZONI, Luigi, 40026 Imola (BO) (IT)
(74) Representative: Karaghiosoff, Giorgio Alessandro

(56) References cited:
- EP-A1- 0 448 080
- EP-A1- 1 059 249
- WO-A1-2018/050587
- WO-A2-2014/072039
- DE-A1-102012 003 947
- US-A1- 2014 205 743

## Description

The present invention relates to the technical field of the machines for painting panels made of sundry materials (wood, glass, fibrocement, etc.). In particular, the invention relates to an extractable trolley for cleaning panels conveying system and for recovering paint.

In the art, machines having a cleaning unit are known; such units have different possibility for accessing them, laterally or frontally. A unit having a frontal access obliges to stop (with ensuing downtime) the production line incorporating the machine, in order to access said unit. The functions of paint recovery and cleaning of the conveying band are combined. This entails a more cumbersome trolley, in that typically each trolley comprises a recovery unit and a cleaning unit. Typically, such trolleys are extracted from the front of the painting machine.

The application EP1964794 of the same applicant describes a cleaning trolley wherein the functions of recovery and cleaning are combined in a unique trolley, typically having a frontal access. Such solution has the advantage of being compact, but requires to stop the production line (with downtime) in order to clean the recovery doctor blade working on the first roller of the system, in case of need of colour change, when the recovery of the first colour is required.

Document EP 1059249 discloses a system according to the preamble of claim 1.

Document US2014/205743 discloses a device for coating workpieces, comprising a belt conveyor drivable in rotation for transporting workpieces to be coated, at least one paint spraying robot and at least one surface spraying machine, wherein the paint spraying robot is set up to coat side surfaces and/or top surfaces of the workpiece and the surface spraying machine is set up to coat the top surfaces and/or side surfaces of the workpiece.

WO2014072039 discloses a paint-spraying installation comprising a belt conveyor driven so as to rotate for transporting workpieces to be coated, wherein the belt conveyor has a conveyor belt and at least two guide pulleys and at least one coating discharge device for the conveyor belt, wherein the coating discharge device has a scraper belt driven so as to rotate and at least two guide pulleys exhibits, wherein on the scraper belt at least one additional scraping means is provided which presses against the conveyor belt.

EP448080 discloses a self-cleaning belt conveyor for objects to be treated with liquid substances in spray painting or dyeing plants of the type having a belt with continuous surface, extending between a head drum and a tail drum and carrying said objects across the area where the liquid substance is applied. The belt consisting of a thin sheet of non-adherent plastic material, means being provided to remove and recover the liquid substance deposited on the belt around the objects being treated, as well as belt cleaning means, both such means being positioned downstream of the spray painting area. The width of the belt area onto which the liquid substance is applied is smaller than the working width of said means, and this last width is in turn smaller than the width of the belt.

Aim of the present invention is providing a system wherein the functions of recovery and cleaning are independent from each other, wherein a plurality of independent recovery unit is available so that the cleaning of one of said units is possible without the need to stop the production line. Such system is preferably extracted from the side of the painting machine.

This object is achieved by an apparatus and a method having the features of the independent claims. Advantageous embodiments and refinements are specified in claims dependent thereon.

The recovery and cleaning system according to the present invention comprises:
- At least an independent recovery unit;
- At least a cleaning unit.

In the illustrated preferred embodiment, said trolley comprises two recovery units and one cleaning unit.

The method according to the present invention comprises the following steps:
- Inserting a recovery and/or cleaning unit laterally with respect to panel direction of forward motion;
- Bringing the respective roller and doctor blade of each unit into contact with the conveying band to be cleaned;
- Using the recovery and/or cleaning units for the desired time;
- Interrupting the contact between roller and doctor blade on one side and conveying band on the other side;
- Laterally extracting the single unit from the painting machine;
all said operations can be performed while the machine for applying paint continues its painting of panels.

A first advantage of the present invention is the possibility of avoiding the downtime connected to cleaning and maintenance operations. This advantage is particularly interesting in complex production lines comprising a plurality of painting machines placed in series.

A second advantage is providing a modular solution to the problem, which allows to provide machines with a number of recovery units independent from the number of cleaning units. Both these modular units can be present in the painting machine in the desired number, so as to comply with any requirement of cleaning and paint recovery.

A third advantage is that the cleaning of the conveyor band by a human operator is easier and lighter. In this solution, the recovery unit only can be extracted from the painting machine, which is more manoeuvrable and easier to clean.

According to an embodiment the system comprises at least two independent paint recovering units and at least one independent cleaning unit, each of these units being mounted on a separate independent structure such as a trolley or a carriage which is displaceable relatively from the conveying belt and each of the said independent recovering units being able to be switched independently and together or alternatively from an active condition to an inactive condition of paint recovering from the conveying band.

According to an embodiment control means of the system are provided which controls the conveyor band to continuously move and to switch only one of recovering units at the time in an active condition maintaining the other in an active paint recovering condition.

Further advantages and properties of the present invention are disclosed in the following description, in which exemplary embodiments of the present invention are explained in detail on the basis of the drawings:
Figure 1 Side view of a system comprising two recovery trolley and one cleaning trolley, wherein the first recovery unit is active;
Figure 2 Side view of a system comprising two recovery trolley and one cleaning trolley, wherein the second recovery unit is active;
Figure 3 Axonometric view of the system of Figure 1, wherein one of the two recovery units was extracted laterally for maintenance.

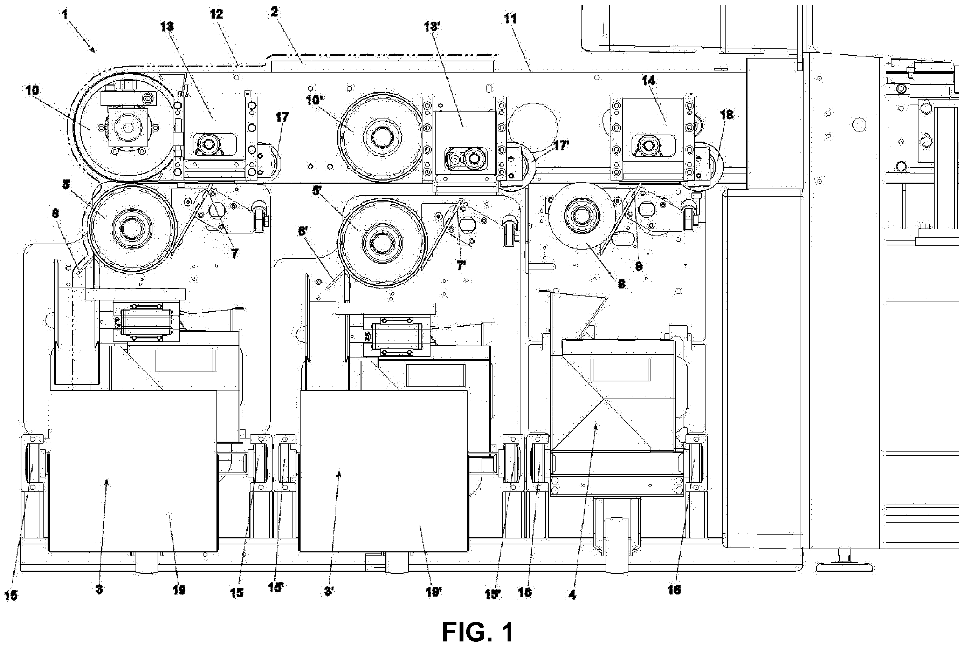

Figure 1 shows a preferred, but not limiting, embodiment, wherein a painting machine 1 for panels comprises a first paint recovery unit 3, a second paint recovery unit 3', and a cleaning unit 4. A panel 2 to be painted is conveyed through a conveying band 11. Paint is applied to said panel 12 through a spraying system, e.g. spraying guns, rotary bells, etc. A dotted line indicates sprayed paint 12.

It is worth noting that the cleaning trolley 3 is identical to the adjacent cleaning trolley 3': both are a module that can be repeated as many times as desired. The identity of the components is underlined by the identity of the reference numbers.

In Figure 1 the first recovery unit 3 is active: this can be noted by the fact that the first reverse roller 5 and the conveying band 11 fit together, while the second roller 5' and the conveying band 11 do not.

The recovery units 3 and 3' comprise each a reverse roller 5, 5', a recovery doctor blade 6, 6', a drying and solvent containment blade 7, 7', respectively. 10 and 10' are idle rollers of recovery units 3, 3'. 13, 13' indicates the lifting system of said recovery unit.

In the present description and in the claims, reverse roller means a roller rotating in a different direction with respect to the direction of forward motion of the conveying band, or whose circumferential surface moves in a direction opposed to that of the conveying band in correspondence of a tangent to said conveying band or to a plane parallel to said tangent.

The numerals 17, 17' indicates an idle roller placed on conveying band 11, allowing an improved efficacy in drying by blade 7, 7'.

15 and 15' indicate a lateral extracting/inserting guide system for said recovery units 3, 3'. Such system comprises a combination of lateral wheels pivoting around an axis substantially parallel to the longitudinal direction or of forward motion of said conveying band. Such wheels are part of a trolley dedicated for each of the two recovery units 3, 3'. Said wheels engage in two opposed parallel sliding guides, which are adjacent to every longitudinal side of the recovery unit 3, 3'. This combination of extracting/inserting guides and trolley allows to perform a lateral movement for the extraction/insertion of said recovery units.

Other systems like slide or glide systems can be used as an alternative to the above-illustrated trolley.

A cleaning unit 4 comprises a cleaning roller 8, a drying blade 9, and an idle roller 17'. 14 indicates the lifting system of said cleaning unit.

The numeral 16 indicates a lateral extracting/inserting guide system for said cleaning units 4, which is identical to the above-described extracting/inserting guide system for recovery units 3, 3'.

18 indicates an idle roller allowing an improved efficacy in drying performed by blade 9.

Said recovery units 3, 3' and cleaning unit 4 can be active on said conveying band 11 only if they fit together, having been lifted by lifting system 13, 13', 14, respectively.

In the present embodiment, the idle roller 17' performs a double action: as idle roller for the drying generated by roller 7'and as idle roller for cleaning roller 8.

For simplicity's sake, the circuit of solvent was not shown in the present Figures; such circuit was well described in EP1964794, and does not form the object of the present application.

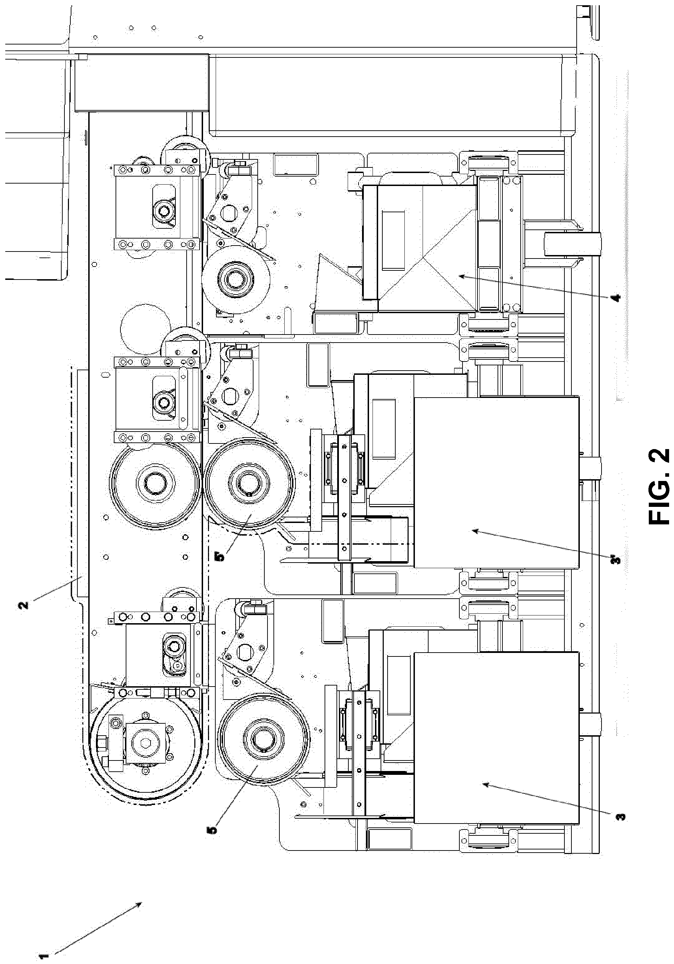

Figure 2 shows a painting machine 1 for panels 2 comprising a first paint recovery unit 3, a second paint recovery unit 3', and a cleaning unit 4, wherein the second recovery unit 3' is active. This can be noted by the fact that the second reverse roller 5' and the conveying band 11 fit together, while the first roller 5 and the conveying band 11 do not.

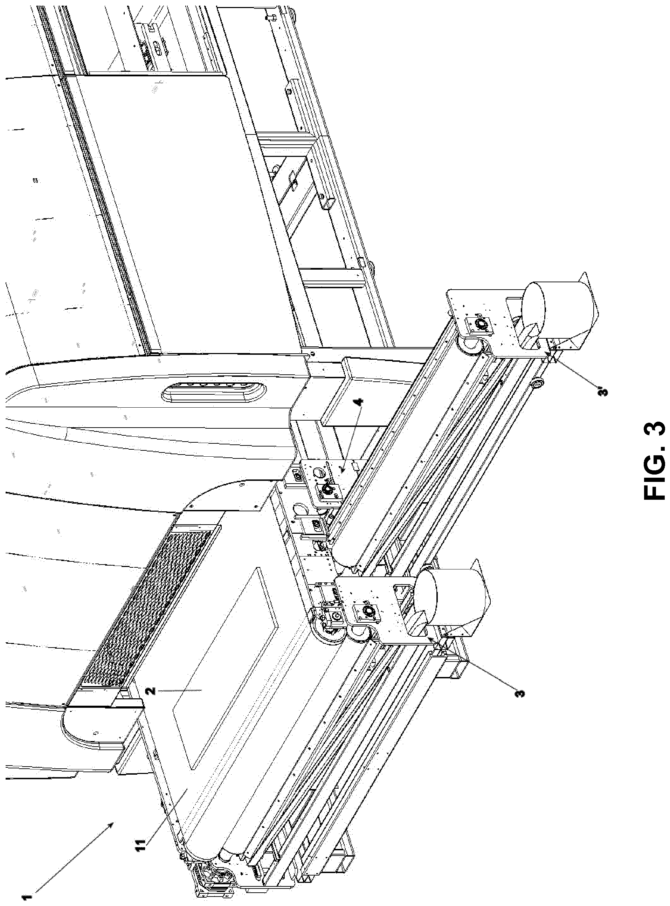

Figure 3 shows a machine 1 for applying paint, which has the same configuration as in Figure 1 and 2. It comprises a first paint recovery unit 3, a second paint recovery unit 3', and a cleaning unit 4, wherein said second recovery trolley 3' was extracted laterally with respect to the direction of forward motion of panels 2, to be painted in the machine 1 itself.

E.g., the first recovery unit 3 always recovers white colour, while the second recovery unit 3' always recovers different colours. Alternatively, the two recovery units 3 and 3' recover different colours.

The method for using said painting machine 1 for painting panels 12 conveyed by a conveying band 11 comprises the following steps:
- Laterally inserting a recovery unit 3 into machine 1 through inserting guides 15;
- Lifting said recovery unit 3 through said lifting system 13, bringing its respective roller 5 into contact with the conveying band 11 to be cleaned;
- Using said paint recovery unit 3 for the desired time;
- Lowering said recovery unit 3 through said lifting system 13 bringing its respective roller 5 at a distance from the conveying band 11 to be cleaned, when a change of paint is needed, while said painting machine 1 continues its painting action;
- Laterally extracting said recovery unit 3 through said extracting guides 15.

The above-explained method can be used in the same way for the at least one cleaning units 4, making use of respective extracting/inserting guides 16, and bringing said cleaning roller 8 into contact with said conveying band 11.

In relation to the principle underlying the disclosed embodiments it has to be noticed that the recovery units 3, 3' have a reverse roller 5, 5' which takes the paint or coating off the conveyor band onto their external surfaces and that a doctor blade 6 acting on the surface of the roller 5, 5' scrapes the paint from the surface of the rollers 5, 5' and convey this recovered paint into the recovery tank 19. Differently, the cleaning unit 4 provides for a cleaning roller 8 has only the function of distributing a cleaning agent on the band which is scraped away from the conveyor band 11 by the doctor blade 9. As it appears from the figures no doctor blade is necessary to cooperate with the cleaning roller 8.
- 1: Painting machine
- 2: Panels to be painted
- 3: Recovery unit
- 4: Cleaning unit
- 5: Reverse roller
- 6: Recovery doctor blade
- 7: Drying blade
- 8: Cleaning roller
- 9: Drying blade
- 10: Idle roller
- 11: Conveying band
- 12: Sprayed paint
- 13: Lifting system for recovery unit
- 14: Lifting system for cleaning unit
- 15: Extracting/inserting guide system for recovery unit
- 16: Extracting/inserting guide system for cleaning unit
- 17: Idle roller
- 18: Idle roller
- 19: Recovery tank

## Claims

1. System (3, 3', 4) for recovering paint and cleaning in a painting machine (1) provided with a conveying band (11) for conveying panels (12) to be painted, comprising:
- at least one unit (3, 3') for paint recovery, comprising a reverse roller (5, 5') in contact with said conveying band, recovering paint (12) sprayed on said conveying band (11) itself, and a doctor blade (6, 6') which in its turn scrapes said reverse roller (5, 5') allowing to recover paint for its successive channelling to a tank (19),
- at least one cleaning unit (4) comprising a cleaning roller (8), a drying blade (9), an idle roller (17'),
wherein
- said at least one paint recovery unit (3) is provided in the form of an independent unit; and
- said at least one cleaning unit (4) for said conveying band is provided in the form of an independent unit,
**characterized in that**
- said at least one paint recovery unit (3, 3') and said at least one cleaning unit (4) are shiftable independently from each other with respect to said conveying band (11) between an operative position wherein said rollers (5, 5', 8) of said units (3, 3', 4) are in a vertically aligned position with said conveying band (11), and a non-operative or resting position wherein said rollers are in a position non vertically coinciding with said conveying band, said shifting occurring through the lateral extraction of said paint recovery and cleaning units (3, 3', 4) with respect to the axis of forward motion of the panels (12) to be painted and/or the longitudinal axis of said conveying band (11).

2. System (3, 3', 4) for recovering paint and cleaning in a painting machine (1) according to claim 1, comprising at least two paint recovery units (3, 3') in the form of independent units, and at least an independent cleaning unit (4) in the form of an independent unit for said conveying band.

3. System (3, 3', 4) for recovering paint and cleaning in a painting machine (1) according to claim 1 or 2, wherein in correspondence of each recovery roller (5, 5', 8), on the opposed side of the conveying band (11) to be cleaned, an idle roller (10, 10', 17') is present.

4. System (3, 3', 4) for recovering paint and cleaning in a painting machine (1) according to claim 2, wherein a paint recovery unit (3, 3') and a cleaning unit (4) always work together, while the further recovery unit (3', 3) is in its resting position, from which it can be extracted.

5. System (3, 3', 4) for recovering paint and cleaning in a painting machine (1) according to claim 4, wherein the extraction of single recovery and/or cleaning units (3, 3', 4) occurs through an extracting/inserting guide system (15, 15', 16) comprising a combination of a trolley and sliding guides of said trolley, which are independent for each paint recovery and cleaning unit (3, 3', 4).

6. System (3, 3', 4) for recovering paint and cleaning in a painting machine (1) according to claim 1 or 2, wherein the action of said paint recovery units (3, 3') and/or cleaning units (4) occurs when their respective roller (5, 5', 8) and said conveying band (11) to be cleaned fit together, thanks to the lifting of said units through a respective lifting system (13, 13', 14).

7. Method for paint recovery and cleaning of a painting machine (1) making use of the apparatus according to claims 1-6, comprising the following steps:
- laterally inserting a recovery unit (3) into machine (1) through the sliding of its respective trolley on guides (15);
- lifting said recovery unit (3) through a lifting system (13), bringing its respective roller (5) into contact with the conveying band (11) to be cleaned;
- using said paint recovery unit (3) for the desired time;
- lowering said recovery unit (3) through said lifting system 13 bringing its respective roller (5) at a distance from the conveying band (11) to be cleaned, when a change of paint is needed, while said painting machine (1) continues its painting action;
- laterally extracting said recovery unit (3) through shifting of said trolley on its guide system (15).

8. Method for paint recovery and cleaning of a painting machine (1) making use of the apparatus according to claim 7, wherein the same method is used also for said cleaning unit (4) making use of its respecting extracting/inserting guide system (16), and bringing said cleaning roller (8) into contact with said conveying band (11).

## Patentansprüche

1. System (3, 3', 4) zur Rückgewinnung von Farbe und Reinigung in einer mit einem Förderband (11) versehenen Streichmaschine (1) zum Fördern von zu lackierenden Paneelen (12), umfassend:
- mindestens eine Einheit (3,3') zur Farbrückgewinnung, umfassend eine mit dem Förderband in Kontakt stehende Revers-Walze (5, 5'), welche die auf dem Förderband (11) aufgespritzte Farbe (12) zurückgewinnt, und eine Rakel (6, 6'), die ihrerseits die Revers-Walze (5,5') abstreift, um Farbe zur nachfolgender Einleitung in einen Tank (19) zurückzugewinnen,
- mindestens eine Reinigungseinheit (4) mit einer Reinigungswalze (8), einer Trocknungsrakel (9), einer Leerlaufwalze (17'),
wobei
- die mindestens eine Farbrückgewinnungseinheit (3) als eigenständige Einheit ausgebildet ist; und
- die mindestens eine Reinigungseinheit (4) für das Förderband als eigenständige Einheit ausgebildet ist,
**dadurch gekennzeichnet, dass**
- die mindestens eine Farbrückgewinnungseinheit (3,3') und die mindestens eine Reinigungseinheit (4) unabhängig voneinander bezüglich des Förderbandes (11) verschiebbar sind, zwischen einer Betriebsstellung, in der sich die Walzen (5, 5', 8) der Einheiten (3, 3', 4) in einer vertikal ausgerichteten Stellung mit dem Förderband (11) befinden, und einer Außerbetriebs- oder Ruhestellung, in der sich die Walzen in einer nicht vertikal mit dem Förderband zusammenfallenden Stellung befinden, wobei die Verschiebung durch seitliches Herausziehen der Farbrückgewinnungs- und Reinigungseinheiten (3, 3',4) bezüglich der Bewegungsachse der zu lackierenden Paneele (12) und/oder der Längsachse des Förderbands (11) erfolgt.

2. System (3, 3', 4) zur Rückgewinnung von Farbe und Reinigung in einer Streichmaschine (1) nach Anspruch 1, umfassend mindestens zwei Farbrückgewinnungseinheiten (3, 3') in Form von eigenständigen Einheiten und mindestens eine eigenständige Reinigungseinheit (4) in Form einer eigenständigen Einheit für dieses Förderband.

3. System (3, 3', 4) zur Rückgewinnung von Farbe und Reinigung in einer Streichmaschine (1) nach Anspruch 1 oder 2, wobei bei jeder Rückgewinnungswalze (5,5', 8) auf der gegenüberliegenden Seite des zu reinigenden Förderbandes (11) eine Leerlaufwalze (10 10', 17') vorhanden ist.

4. System (3, 3', 4) zur Rückgewinnung von Farbe und Reinigung in einer Streichmaschine (1) nach Anspruch 2, wobei eine Farbrückgewinnungseinheit (3,3') und eine Reinigungseinheit (4) stets zusammenarbeiten, während sich die weitere Rückgewinnungseinheit (3',3) in ihrer Ruheposition befindet, aus der sie entnommen werden kann.

5. System (3, 3', 4) zur Rückgewinnung von Farbe und Reinigung in einer Streichmaschine (1) nach Anspruch 4, wobei die Entnahme von einzelnen Rückgewinnungs- und/oder Reinigungseinheiten (3, 3', 4) durch ein Auszug- und Einzugsführungssystem (15, 15', 16) erfolgt, umfassend eine für jede Farbrückgewinnungs- und Reinigungseinheit (3,3',4) unabhängige Kombination aus einem Wagen und Gleitführungen des Wagens.

6. System (3, 3', 4) zur Rückgewinnung von Farbe und Reinigung in einer Streichmaschine (1) nach Anspruch 1 oder 2, wobei die Farbrückgewinnungseinheiten (3, 3') und/oder Reinigungseinheiten (4) aktiv werden, wenn ihre jeweilige Walze (5, 5', 8) und das zu reinigende Förderband (11) durch Anheben dieser Einheiten durch ein jeweiliges Hubsystem (13 13', 14) zusammengebracht werden.

7. Verfahren zur Farbrückgewinnung und Reinigung einer Streichmaschine (1) unter Verwendung der Vorrichtung nach den Ansprüchen 1 -6, umfassend die folgenden Schritte:
- seitliches einschieben einer Rückgewinnungseinheit (3) in eine Maschine (1) durch Verschieben ihres jeweiligen Wagens auf Führungen (15);
- Anheben der Rückgewinnungseinheit (3) durch ein Hubsystem (13), wobei ihre jeweilige Walze (5) mit dem zu reinigenden Förderband (11) in Kontakt gebracht wird;
- Verwenden der Farbrückgewinnungseinheit (3) für die gewünschte Zeit;
- Absenken der Rückgewinnungseinheit (3) durch das Hubsystem 13, wobei ihre jeweilige Walze (5) in einem Abstand von dem zu reinigenden Förderband (11) gebracht wird, wenn eine Farbänderung erforderlich ist, während die Streichmaschine (1) ihre Streicharbeit fortsetzt;
- seitliches Herausziehen der Rückgewinnungseinheit (3) durch Verschieben des Transportwagens auf dessen Führungssystem (15).

8. Verfahren zur Farbrückgewinnung und Reinigung einer Streichmaschine (1) unter Verwendung der Vorrichtung nach Anspruch 7, wobei dasselbe Verfahren auch für die Reinigungseinheit (4), unter Verwendung des entsprechenden Auszug- und Einzugsführungssystem (16), und die Reinigungswalze (8) mit dem Förderband (11) in Kontakt gebracht wird.

## Revendications

1. Système (3, 3', 4) de récupération et de lavage de peinture dans une installation de peinture (1) muni d'un convoyeur (11) pour transporter des panneaux (12) à peindre, comprenant:
- au moins une unité (3, 3') de récupération de peinture, comprenant un rouleau contraire (5, 5') en contact avec ledit convoyeur récupérant la peinture (12) pulvérisée sur ledit convoyeur (11) lui-même, et un racloir (6, 6') qui racle à son tour ledit rouleau contraire (5, 5'), permettant de récupérer la peinture pour sa canalisation successive vers un réservoir (19),
- au moins une unité de lavage (4) comprenant un rouleau de lavage (8), une lame de séchage (9), un rouleau inactif (17'),
dans lequel
- ladite au moins une unité de récupération de peinture (3) est fournie sous la forme d'une unité indépendante; et
- ladite au moins une unité de lavage (4) pour ledit convoyeur est fournie sous la forme d'une unité indépendante,
**caractérisé en ce que**
- ladite au moins une unité de récupération de peinture (3, 3') et ladite au moins une unité de lavage (4) peuvent être déplacées indépendamment l'une de l'autre par rapport audit convoyeur (11) entre une position de fonctionnement, dans laquelle lesdits rouleaux (5, 5', 8) desdites unités (3, 3', 4) sont dans une position alignée verticalement avec ledit convoyeur (11), et une position de non fonctionnement ou de repos, dans laquelle lesdits rouleaux sont dans une position ne coïncidant pas verticalement avec ledit convoyeur, ledit déplacement se produisant par l'extraction latérale desdites unités de récupération de peinture et de lavage (3, 3', 4) par rapport à l'axe de mouvement vers l'avant des panneaux (12) à peindre et/ou à l'axe longitudinale dudit convoyeur (11).

2. Système (3, 3', 4) de récupération de peinture et de lavage dans une installation de peinture (1) selon la revendication 1, comprenant au moins deux unités de récupération de peinture (3, 3') sous la forme d'unités indépendantes, et au moins une unité de lavage indépendante (4) sous la forme d'une unité indépendante pour ledit convoyeur.

3. Système (3, 3', 4) de récupération de peinture et de lavage dans une installation de peinture (1) selon la revendication 1 ou 2, dans lequel, en correspondance de chaque rouleau de récupération (5, 5', 8), sur le côté opposé du convoyeur (11) à laver, un rouleau inactif (10, 10', 17') est présent.

4. Système (3, 3', 4) de récupération de peinture et de lavage dans une installation de peinture (1) selon la revendication 2, dans lequel une unité de récupération de peinture (3, 3') et une unité de lavage (4) fonctionnent toujours ensemble, tandis que l'unité de récupération supplémentaire (3', 3) est dans sa position de repos, à partir de laquelle elle peut être extraite.

5. Système (3, 3', 4) de récupération de peinture et de lavage dans une installation de peinture (1) selon la revendication 4, dans lequel l'extraction d'unités uniques de récupération et/ou de lavage (3, 3', 4) est effectuée par un système de guidage d'extraction/insertion (15', 15', 16) comprenant une combinaison d'un charriot et de guides de coulissement dudit chariot, qui sont indépendants pour chaque unité de récupération de peinture et de lavage(3, 3', 4).

6. Système (3, 3', 4) de récupération de peinture et de lavage dans une installation de peinture (1) selon la revendication 1 ou 2, dans lequel l'action desdites unités de récupération de peinture (3, 3') et/ou unités de lavage (4) se produit lorsque leur rouleau respectif (5, 5', 8) et ledit convoyeur (11) à laver s'emboîtent, grâce au soulèvement desdites unités à travers un système de soulèvement respectif (13, 13', 14).

7. Méthode de récupération de peinture et de lavage d'une installation de peinture (1) en utilisant l'appareil selon les revendications 1-6, comprenant les étapes suivantes:
- insertion latérale d'une unité de récupération (3) dans l'installation (1) par le coulissement de son chariot respectif sur des guides (15);
- soulever ladite unité de récupération (3) à travers un système de soulèvement (13), en amenant son rouleau respectif (5) en contact avec le convoyeur (11) à laver;
- utiliser ladite unité de peinture (3) pour le temps désiré;
- abaisser ladite unité de récupération (3) par ledit système de soulèvement (13), en amenant son rouleau respectif (5) à une distance du convoyeur (11) à laver, lorsqu'un changement de peinture est nécessaire, tandis que l'installation de peinture (1) continue son action de peinture;
- extraction latérale de ladite unité de récupération (3) en déplaçant ledit chariot sur son système de guidage (15).

8. Méthode de récupération de peinture et de lavage dans une installation de peinture (1) en utilisant l'appareil selon la revendication 7, dans laquelle la même méthode est également utilisée pour ladite unité de lavage (4), en utilisant son système de guidage d'extraction/insertion (16) respectif et en amenant ledit rouleau de lavage (8) en contact avec ledit convoyeur (11).
